# NEUE EUROPÄISCHE PATENTSCHRIFT

(11) **EP 0 791 533 B2**
(45) Veröffentlichungstag und Bekanntmachung des Hinweises auf die Entscheidung über den Einspruch: **15.06.2005**
(45) Hinweis auf die Patenterteilung: 11.09.2002
(21) Anmeldenummer: 96117752.4
(22) Anmeldetag: 06.11.1996
(51) Int. Cl.: B62M 9/12, B62M 9/10

(54) **Kettenschaltung für Fahrräder**
Chain shifting gear change for bicycles
Changement de vitesse à dérailleur de chaîne pour bicyclettes

(30) Priorität: 23.02.1996 DE 19606667
(43) Veröffentlichungstag der Anmeldung: 27.08.1997
(73) Patentinhaber: SRAM Deutschland GmbH, 97424 Schweinfurt (DE)
(72) Erfinder: Schmidt, Frank, Dipl.-Ing., 97422 Schweinfurt (DE); Brandt, Holger, Dipl.-Ing., 97506 Grafenrheinfeld (DE); Krumbeck, Markus, Dipl.-Ing. (FH), 97422 Schweinfurt (DE); Neuer, Andreas, Dipl.-Ing. Dr., 97422 Schweinfurt (DE)
(74) Vertreter: Thum, Bernhard, Dipl.-Ing.

(56) Entgegenhaltungen:
- EP-A- 0 642 972
- US-A- 5 123 878
- US-A- 5 133 695
- US-A- 5 464 373
- "94 SHIMANO, Bicycle system components" Prospekt

## Beschreibung

Die Erfindung bezieht sich auf eine Kettenschaltung für Fahrräder gemäß dem Oberbegriff des Anspruchs 1.

Eine Kettenschaltung mit einem antreibendem Kettenradsatz und einem angetriebenen Kettenradsatz ist aus der US 5 133 695 bekannt, wo die Zähne der Kettenräder des antreibenden Kettenradsatzes eine asymmetrische Form aufweisen, um einem "Ketten-Verklemm-Phänomen" zu begegnen, das entsteht, wenn die Kette vom größeren auf das kleinere Kettenrad umgelegt werden soll. Es handelt sich darum, daß beim Umlegen unter Last sich die Kette bei einer bestimmten Lage der Zähne des kleinen Kettenrades zu den Zähnen des größeren Kettenrades, nämlich dann, wenn zwischen den betroffenen Eingriffszähnen ein größerer Abstand als ein ganzzeiliges Vielfaches der Kettenteilung auftritt, durch zusätzlich auftretende verstärkend wirkende Kräfte an der Stelle des größeren Kettenrades dort verklemmt, wo sie die Zahnreihe verlassen will.

Erhöht man das Kettenspiel zwischen den Zähnen, um die eben geschilderten Nachteile abzuwenden, so ergibt sich dadurch das Problem des vorzeitigen Umspringens der Kette vom größeren auf das kleinere Kettenrad. Abhilfe wird geschaffen durch Veränderungen am Zahnprofil, das asymmetrisch gestaltet wird in der Weise, daß die antreibende Zahnflanke der Zähne im wesentlichen erhalten bleibt, wobei ein erhabenes Führungsprofil in der Nähe der Zahnspitze angeordnet wird, wobei weiter die zweite gegenüberliegende Zahnflanke jedoch eine Schräge aufweist, die noch vor der Zahnmitte in den Zahnkopf mündet. Der auf diese Weise schlanke ausgeführte Zahn erfüllt die Anforderungen an die Lösung des "Ketten-Verklemm-Phänomens", verstärkt aber ein anderes Problem, welches mit dem Verschleiß der Kette zu tun hat. Unabhängig von der Last sind nämlich immer nur zwei, maximal aber nur drei Zähne an der Drehmomentübertragung beteiligt, während der große Rest der Zähne nur eine Führungsfunktion für die Kette übernimmt. Es sind um so mehr Zähne an der Drehmomentübertragung beteiligt, je neuer die Kette ist und je genauer die Teilung der Kette der Teilung der Zähne auf dem betreffenden Kettenrad übereinstimmt. Die spezifischen Kräfte sind daher besonders hoch und auch der Verschleiß, der sich mit abnehmender Schmierung noch steigert.

Die vorgenannten Gründe waren es auch, die zu der US 5 123 878 geführt haben, wo ebenfalls durch Abschrägen der nicht an der Drehmomentübertragung beteiligten Flanke versucht wird, das "Ketten-Verklemm-Phänomen" zu vermeiden. Auch hier wird das Problem der Drehmomentübertragung durch eine geringe Zahl von Zähnen nicht gelöst, weshalb der Vorschlag gemacht wird, mehr als drei Zähne mit den einzelnen Gelenkrollen der Kette in Kraftverbindung zu bringen, was ohne Zweifel nur durch die Modifikation der an der Drehmomentübertragung beteiligten Zahnflanke möglich ist. Diese Modifikation besteht aus einer Abschrägung dieser Zahnflanke entlang einer Tangente zu dem Schmiegeradius im Zahngrund, die es den Gelenkrollen erlaubt, sich aus dem Zahngrund herauszubewegen und im Bereich des Ketteneinlaufs bereits Drehmoment zu übertragen, bevor die Gelenkrollen sich in die Schmiegeradien der einzelnen Zahnlücken abgesenkt haben. Auf diese Weise werden nicht nur im Schaltvorgang, sondern auch während des regulären Betriebs mehrere Zähne an der Kraftübertragung beteiligt.

Es ist daher die Aufgabe der Erfindung, für eine antreibende Zahnflanke von Zähnen auf Kettenräder eines treibenden Kettenradsatzes eine Form zu finden, die es Gelenkrollen einer Kette ermöglicht, daß unter Last mehr als bisher nur zwei oder drei Zähne an der Drehmomentübertragung zwischen den Kettenrädern und den Gelenkrollen der Kette beteiligt sind.

Die Lösung der Aufgabe ist in den Ansprüchen beschrieben.

Anhand von Skizzen wird die vorgeschlagene Verbesserung der Situation bei der Drehmomentübertragung zwischen den Kettenrädern und der Kette erläutert. Es zeigen:
- Fig. 1: eine Kettenschaltung mit einem treibenden und einem angetriebenen Kettenradsatz sowie einer durch eine Umlegeeinrichtung umlegbare Kette;
- Fig. 2: ein Segment aus dem treibenden Kettenradsatz mit der Kette in Umlegestellung mit an der Antriebsflanke angeschrägten Zähnen;
- Fig. 3: ein Kettenrad mit Antriebsrollen der Kette, bei der der Rollenabstand mit der Zahnteilung des Kettenrades übereinstimmt;
- Fig. 4: die Form eines Zahnes mit der abgeschrägten antreibenden Zahnflanke im Vergleich zur herkömmlichen Zahnflanke;
- Fig. 5: ein Kettenrad mit Gelenkrollen einer Kette, deren Gelenkrollenabstand nicht mit der Zahnteilung des Kettenrades übereinstimmt;

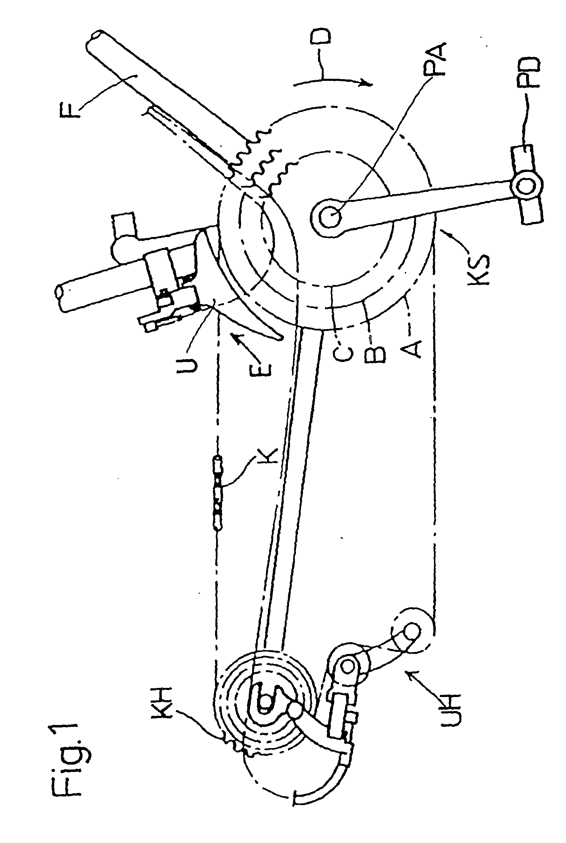

In Fig. 1 ist eine Kettenschaltung beschrieben, die in einen Fahrradrahmen F eingebaut ist und aus einem treibenden Kettenradsatz KS, einem angetriebenen Kettenradsatz KH, einer Kette K mit Kettengliedern KG, einer Umlegeeinrichtung U für das Umlegen der Kette K auf dem treibenden Kettenradsatz KS und einer hinteren Umlegeeinrichtung UH für das Umlegen der Kette K auf dem angetriebenen Kettenradsatz KH besteht. Dertreibende Kettenradsatz KS besteht aus mindestens zwei Kettenrädern, einem größeren Kettenrad A und einem kleineren Kettenrad B, wobei üblicherweise in der Praxis drei Kettenräder koaxial nebeneinander angeordnet sind. Wird der treibenden Kettenradsatz KS vom Fahrradfahrer durch eine Kraft auf ein Pedal PD gedreht, so dreht sich dieses Pedal PD mit den Kettenrädern A,B um eine Pedalachse PA in eine Drehrichtung D, wodurch die Kette K durch die Umlegeeinrichtung U in einem Einlaufbereich E auf eines der Kettenräder A, B, oder aber auch auf ein drittes noch kleineres Kettenrad C aufläuft und den angetriebenen Kettenradsatz KH antreibt.

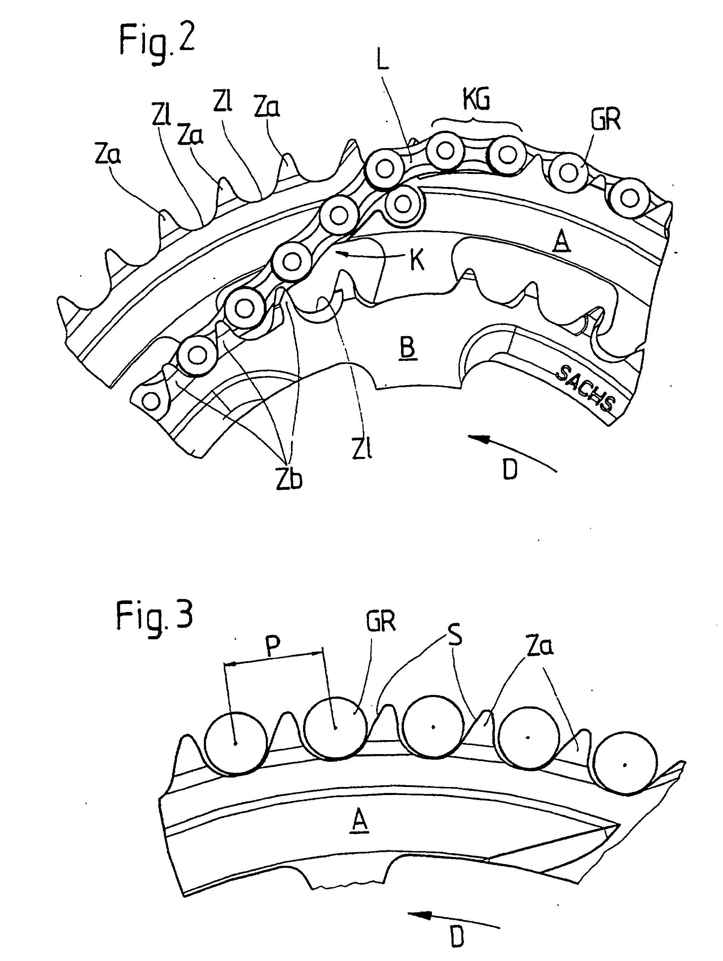

Wie aus Fig. 2 ersichtlich, sind am äußeren Umfang des Kettenrades A Zähne Za angeordnet, zwischen denen Zahnlücken Zl angeordnet sind. Ebenso befinden sich auf der Peripherie des Kettenrades B Zähne Zb zwischen denen Zahnlükken Zl angeordnet sind. Die Kette K befindet sich in Umlegestellung vom kleineren Kettenrad B auf das größere Kettenrad A, wobei diese Kette K in Längsrichtung durch Gelenkrollen GR geschnitten dargestellt ist, um den Eingriff der Zähne Za und Zb zwischen die Gelenkrollen GR der Kette K zu beschreiben. Es wird ferner dargestellt, daß diese Kette K aus Kettengliedern KG mit Laschen L besteht.

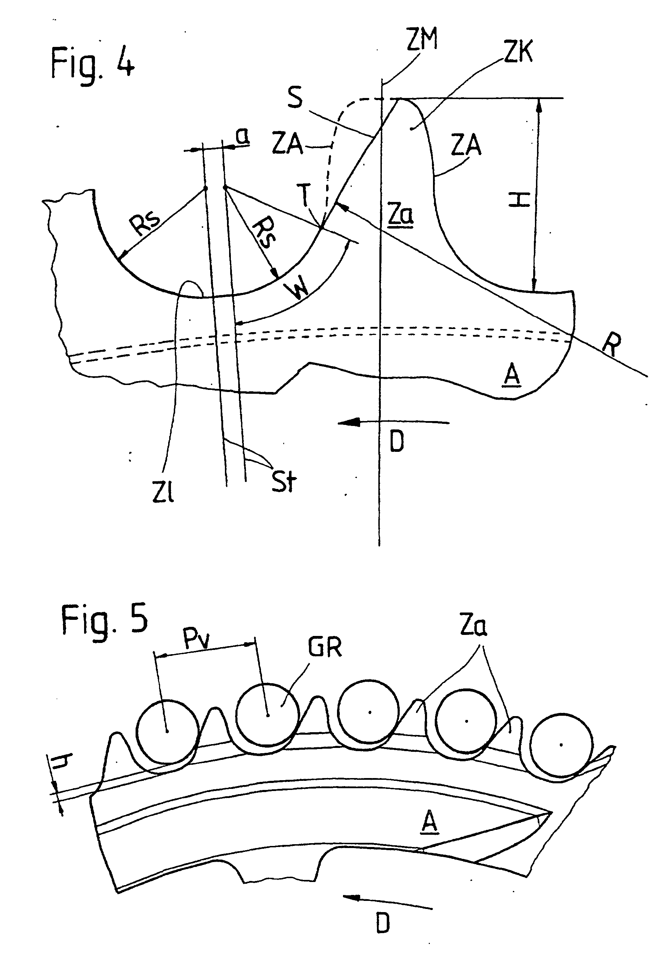

In Fig. 4 wird gezeigt, welche Maßnahmen getroffen sind, um mehr als bisher zwei oder drei Gelenkrollen GR an der Drehmomentübertragung zwischen dem Kettenrad A oder B und den Gelenkrollen GR der Kette K zu beteiligen. Die Zahnlücke Zl besteht wie bisher aus zwei Schmiegeradien Rs, deren Ausgangspunkte voneinander einen Abstand a haben, um ausreichend Spiel für die Gelenkrolle GR zu haben. Der bisherige Stand der Technik weist für den Zahn Za bzw. Zb symmetrische Zahnflanken ZA bezogen auf eine Zahnmitte ZM auf. Gleiches gilt für eine Zahnflanke ZB des Zahnes Zb auf dem kleineren Kettenrad B, wo die Zahnflanken ZB nicht unbedingt mit den Zahnflanken ZA übereinstimmen müssen. Aus Gründen der Analogie jedoch genügte es, im weiteren Verlauf der Beschreibung lediglich von der Zahnflanke ZA für das Kettenrad A zu sprechen. Die in Drehrichtung D mit der Gelenkrolle GR der Kette K zum Zwecke der Drehmomentübertragung zusammenwirkende Zahnflanke ZA wird durch eine Schräge S ersetzt, die tangential in den Schmiegeradius Rs an einer Stelle des Übergangs T tangential einläuft. Die Verbindung der Stelle des Übergangs T mit dem Ausgangspunkt des Schmiegeradius'Rs bildet mit einem Strahl St ausgehend von dem Zentrum des Kettenrades A einen Winkel W, der mindestens 60° beträgt und der Schräge S eine Richtung verleiht, die am oberen, als Zahnkopf ZK bezeichneten Ende des Zahnes über die Zahnmitte ZM hinausgehend mündet. Die Schräge S kann von einer Geraden oder aber auch von einem Radius R gebildet sein. welcher mindestens die Größe des vierfachen Abstandes P der Gelenkrollen GR voneinander aufweist. Der Zahn Za weist eine Höhe H auf, die bei der Anbringung der Schräge S nicht wesentlich verändert wird. Die Zahnflanke ZA auf der der Schräge S gegenüberliegenden Seite des Zahnes Za bleibt von Veränderungen verschont.

Läuft nun eine fabrikneue Kette K mit dem Abstand P der Gelenkrollen GR voneinander auf dem Kettenrad A ab, so entspricht dieser Abstand P genau dem Abstand der Zahnlücken Zl voneinander, wodurch auch bei Krafteinwirkung kein Anlaß für eine Ortsveränderung der Gelenkrollen GR in den Zahnlücken ZI besteht. Weist jedoch die Kette K Verschleiß auf, so verändert sich der Abstand P zwischen den Gelenkrollen GR zu einem vergrößerten Abstand Pv, was zur Folge hat, daß die Abstände der Zahnlücken Zl nicht mehr mit den vergrößerten Abständen Pv übereinstimmen. Die Gelenkrollen GR der Kette K werden auf der schiefen Ebene der Schräge S bei Krafteinwirkung in Drehrichtung D aus ihrem Kontakt mit dem Schmiegeradius Rs um eine Höhendifferenz h herausgehoben, wobei sich eine um so größere Differenz h ergibt, je größer der Abstand Pv ist.

Die Figuren 3 und 5 zeigen somit den Unterschied zwischen dem Betrieb einer neuen Kette K auf dem Kettenrad A und einer bereits stärker verschlissenen Kette K auf eben diesem Kettenrad, wobei aber beide Kombinationen speziell im Einlaufbereich E der Kette K auf das Kettenrad A über mehrere Zähne Za hinweg das Drehmoment übertragen können. Als weiterer Vorteil des Zusammenwirkens der an der antreibenden Zahnflanke ZA bzw. ZB veränderten Zähne Za bzw. Zb besteht in der größeren Wahrscheinlichkeit eines sauberen Kettenübergangs an Stellen, die ursprünglich nicht für den Kettenübergang vorgesehen waren. In einem solchen Fall kann die Gelenkrolle GR mit der Schräge S des Zahnes Za bzw. Zb schon ganz in der Nähe des Zahnkopfes ZK in Berührung kommen, wo sich bereits günstigere Mitnahmebedingungen für die Gelenkrolle GR ergeben, als beim Zusammentreffen der herkömmlichen Zahnflanke ZA mit ihrem Radius in der Nähe des Zahnkopfes ZK. Ferner ist die Wahrscheinlichkeit dafür, daß der noch verbleibende schmälere Zahnkopf ZK zwischen zwei Gelenkrollen GR gerät, größer, als bei herkömmlich ausgebildeten Zähnen. Wie die Versuche bestätigen, wird auch eine Verbesserung des im Stand der Technik beschriebenen "Ketten-Verklemm-Phänomens" beobachtet. Erklärt wird dies dadurch, daß im Einlaufbereich des jeweils größeren Kettenrades A die um die Höhendifferenz h angehobene Kette leichter aus ihrer Verbindung mit dem betreffenden Kettenrad A herausbringbar ist. Weitere Vorteile liegen in der günstigen Verschleißgestaltung der antreibenden Zahnflanke mit der Schräge S in der Weise, daß die Zähne nicht mehr an ihren antreibenden Zahnflanken ZA in Verlängerung des Schmiegeradius'Rs einlaufen, sondern daß die Veschleißzone entlang der Schräge S über einen größeren Bereich mit geringerer Tiefe erstreckt. Es ist leicht einzusehen, daß sich das "Ketten-Verklemm-Phänomen" noch verstärkt, wenn sich die Herkömmliche Zahnflanke ZA durch Verschleiß derart verändert, daß eine Art Hinterschnitt des Zahnes entsteht.

## Patentansprüche

1. Kettenschaltung für Fahrräder, umfassend einen treibenden Kettenradsatz (KS) und einen angetriebenen Kettenradsatz (KH), sowie eine diese beiden Kettenradsätze (KS u. KH) miteinander verbindende Kette (K) mit Kettengliedern (KG), bestehend aus Gelenkrollen (GR) und Laschen (L), wobei der Kettenradsatz (KS) mindestens zwei Kettenräder (A,B...) umfasst, wobei weiter zum Umlegen der Kette (K) auf ein jeweils anderes Kettenrad (A,B) des Kettenradsatzes (KS) eine Umlegeeinrichtung (U) in einem Einlaufbereich (E) der Kette (K) Bewegungen in einer zur Pedalachse (PM) des Kettenradsatzes (KS) parallelen Richtung erteilen kann, und wobei die Kettenräder (A,B) des Kettenradsatzes (KS) je eine Vielzahl von Zähnen (Za,Zb) aufweisen, die miteinander durch Zahnlücken (Zl) mit Schmiegeradien (Rs) verbunden sind,
**dadurch gekennzeichnet,**
**dass** eine Mehrzahl aufeinander folgender in Mitnahmeverbindung mit Gelenkrollen (G) der Kette (K) stehender Zähne (Za,Zb), axial auf die Kettenräder (A,B) gesehen, durch eine die Zahnbreite schmälernde Schräge (S) eine asymmetrische Form aufweisen, wobei eine Zahnflanke (ZA) dieser Zähne (Za) des ersten Kettenrades (A) sowie eine Zahnflanke (ZB) dieser Zähne (Zb) des zweiten Kettenrades (B) durch die Schräge (S) auf der Seite gebildet ist, die im Falle des Antriebs der Kettenräder (A,B) durch den Fahrradfahrer mit den Gelenkrollen (G) der Kette (K) in Mitnahmeverbindung tritt.

2. Kettenschaltung nach Anspruch 1,
**dadurch gekennzeichnet,**
**daß** die Schräge (S) als Tangente an den Schmiegeradius (Rs) eine Verbindung zwischen diesem Schmiegeradius (Rs) und dem Zahnkopf (ZK) darstellt, wobei mindestens die Hälfte der Zahnkopfbreite (ZK) entfällt.

3. Kettenschaltung nach einem der Ansprüche 1 bis 2,
**dadurch gekennzeichnet,**
**daß** die Schräge (S) eine Gerade ist.

4. Kettenschaltung nach einem der Ansprüche 1 bis 3,
**dadurch gekennzeichnet,**
**daß** die Schräge (S) einen Radius (R) mit der Größe von mindestens dem vierfachen Abstand (P) zwischen zwei benachbarten Gelenkrollen (GR) beschreibt und der Schräge (S) eine konvexe Form verleiht.

5. Kettenschaltung nach einem der Ansprüche 1 bis 4,
**dadurch gekennzeichnet,**
**daß** der Schmiegeradius (Rs) auf einem Bogen entsprechend einem Winkel (W) von mindestens 60° bis zu einer Stelle (T) seines Übergangs in die tangential einlaufende Schräge (S) erhalten bleibt.

## Claims

1. Derailleur shift for cycles, comprising a driving sprocket-wheel set (KS), a driven sprocket-wheel set (KH) and a chain (K) which connects these two sprocket-wheel sets (KS and KH) to one another and has chain links (KG) comprising articulation rollers (GR) and link plates (L), the sprocket-wheel set (KS) furthermore comprising at least two sprocket wheels (A, B...), a transfer device (U) being capable of imparting to the chain (K) movements in a direction parallel to the pedal axis (PM) of the sprocket-wheel set (KS) in an entry area (E) in order to transfer the chain (K) to a different sprocket wheel (A, B) of the sprocket-wheel set (KS) in each case, and the sprocket wheels (A, B) of the sprocket-wheel set (KS) each having a multiplicity of teeth (Za, Zb), which are connected to one another by tooth gaps (Zl) with osculating radii (Rs), **characterized in that**, when looking axially at the sprocket wheels (A, B), a plurality of successive teeth (Za, Zb) which are in driving connection with articulation rollers (G) of the chain (K) have an asymmetric shape due to a chamfer (S) which reduces the width of the teeth, a tooth flank (ZA) of these teeth (Za) of the first sprocket wheel (A) and a tooth flank (ZB) of these teeth (Zb) of the second sprocket wheel (B) being formed by the chamfer (S) on the side which enters into driving connection with the articulation rollers (G) of the chain (K) in the case where the sprocket wheels (A, B) are being driven by the cyclist.

2. Derailleur shift according to Claim 1, **characterized in that**, as a tangent to the osculating radius (Rs), the chamfer (S) represents a connection between this osculating radius (Rs) and the tooth crest (ZK), at least half the width of the tooth crest (ZK) being removed.

3. Derailleur shift according to either of Claims 1 and 2, **characterized in that** the chamfer (S) is a straight line.

4. Derailleur shift according to one of Claims 1 to 3,
**characterized in that** the chamfer (S) describes a radius (R) which is at least four times as large as the spacing (P) between two adjacent articulation rollers (GR) and gives the chamfer (S) a convex shape.

5. Derailleur shift according to one of Claims 1 to 4,
**characterized in that** the osculating radius (Rs) is maintained over an arc corresponding to an angle (W) of at least 60° up to a point (T) where it makes a transition to the tangentially entering chamfer (S).

## Revendications

1. Changement de vitesses à dérailleur de chaîne pour bicyclettes, comprenant un jeu de plateaux de pédalier menant (KS) et un jeu de pignons mené (KH), ainsi qu'une chaîne (K) reliant ces deux jeux de roues dentées (KS et KH) l'un à l'autre, comprenant des maillons de chaîne (KG) se composant de rouleaux d'articulation (GR) et de flasques (L), le jeu de plateaux de pédalier (KS) comprenant au moins deux plateaux (A, B...), un dispositif de changement (U) pour faire passer la chaîne (K) à un autre plateau respectif (A, B) du jeu de plateaux de pédalier (KS) pouvant en outre produire des mouvements dans une direction parallèle à l'axe du pédalier (PM) du jeu de plateaux de pédalier (KS) dans une zone d'entrée (E) de la chaîne (K), et les plateaux (A, B) du jeu de plateaux de pédalier (KS) présentant chacun une pluralité de dents (Za, Zb) qui sont reliées entre elles par des crans (ZI) avec des rayons d'osculation (Rs),
**caractérisé en ce que**
une pluralité de dents successives (Za, Zb) venant en liaison d'entraînement avec les rouleaux d'articulation (G) de la chaîne (K), vues axialement sur les plateaux (A, B), présentent une forme asymétrique par un biseau (S) réduisant la largeur des dents, un flanc de dent (ZA) de ces dents (Za) du premier plateau (A) ainsi qu'un flanc de dent (ZB) de ces dents (Zb) du deuxième plateau (B) étant formés par le biseau (S) du côté qui vient en liaison d'entraînement avec les rouleaux d'articulation (G) de la chaîne (K) lors de l'entraînement des plateaux (A, B) par le cycliste.

2. Changement de vitesses à dérailleur de chaîne selon la revendication 1,
**caractérisé en ce que**
le biseau (S) réalise, en tant que tangente au rayon d'osculation (Rs), une liaison entre ce rayon d'osculation (Rs) et le bout de la dent (ZK), au moins la moitié de la largeur du bout de la dent (ZK) manquant.

3. Changement de vitesses à dérailleur de chaîne selon l'une quelconque des revendications 1 à 2,
**caractérisé en ce que**
le biseau (S) est une droite.

4. Changement de vitesses à dérailleur de chaîne selon l'une quelconque des revendications 1 à 3,
**caractérisé en ce que**
le biseau (S) décrit un rayon (R) d'une grandeur d'au moins quatre fois la distance (P) entre deux rouleaux d'articulation voisins (GR) et le biseau (S) a une forme convexe.

5. Changement de vitesses à dérailleur de chaîne selon l'une quelconque des revendications 1 à 4,
**caractérisé en ce que**
le rayon d'osculation (Rs) reste contenu sur un arc correspondant à un angle (W) d'au moins 60° jusqu'à un point (T) où il se prolonge par le biseau (S) s'étendant tangentiellement.
